# EUROPEAN PATENT SPECIFICATION

(11) **EP 3 163 398 B1**
(45) Date of publication and mention of the grant of the patent: **05.08.2020**
(21) Application number: 16183307.4
(22) Date of filing: 09.08.2016
(51) Int. Cl.: G05D 7/01

(54) **CONTROL VALVE FOR HEATING PLANTS**
STEUERUNGSVENTIL FÜR HEIZWERKE
VALVE DE COMMANDE POUR INSTALLATIONS DE CHAUFFAGE

(30) Priority: 28.10.2015 IT UB20155230
(43) Date of publication of application: 03.05.2017
(73) Proprietor: Officine Rigamonti S.p.A., 13018 Valduggia (VC) (IT); Giacomini S.p.A., 28017 S. Maurizio d'Opaglio (NO) (IT)
(72) Inventor: BELLOCA, Mattia, I-13018 Valduggia, Vercelli (IT)
(74) Representative: Capasso, Olga

(56) References cited:
- WO-A1-00/68753
- WO-A1-90/01657
- WO-A1-2006/003685

## Description

The present invention relates to a control valve for heating plants, in particular a so-called DPCV (Differential Pressure Control Valve).

### Background art

In common heating plants, there is a need to adjust the quantity of water circulating in all heating elements, such as thermosiphon plants, coils for floor heating, fan-coils, etc., to ensure correct climatic comfort for all utilities. The greater the flow rate of hot water circulating inside the heating element, the greater the quantity of heat yielded to the surroundings.

During the commissioning of the plant, the installer should correctly adjust the flow rate circulating in all utilities by modifying the drop in pressure of each branch. This adjustment is made by means of specific valves called balancing valves, which are placed upstream of all heating elements, that is on the hot delivery branch of the plant. A "static balancing valve" may be installed upstream of all the utilities on the hot branch for better static balancing, the valve being capable of adjusting the overall flow rate circulating inside the plant. This operation is called the "static balancing" of the plant and is performed under nominal operating conditions. The static balancing valve therefore allows the overall flow rate of hot water that should circulate in the whole heating plant, to be adjusted.

A DPCV (Differential Pressure Control Valve) is instead installed on the cold return branch of the plant, the DPCV having an adjustment system formed by two chambers, an upper chamber and a lower chamber, which are separated by a membrane. The upper chamber of such a valve is connected to the static balancing valve or in another point along the delivery line by means of a capillary tube, while the lower chamber is subjected to the pressure of the cold return branch, below the first. The difference in pressure between the delivery conduit and the return conduit is due to the sum of all the losses in load in the plant.

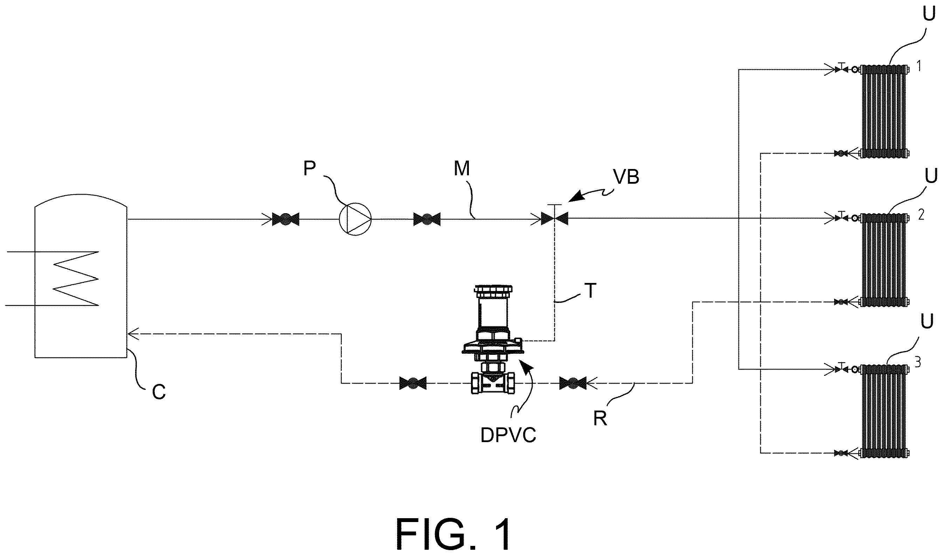

A diagram of a typical heating plant is shown in figure 1.

A correctly balanced plant has the following known features: i) overall flow rate; ii) loss of overall load; iii) flow rate and subsequent loss of load of all utilities, in order to exchange the correct quantity of heat.

As mentioned, the static balancing is performed under nominal operating conditions, that is when the request for heat is maximum for all utilities. However, this condition occurs only for brief periods during the heating cycle, while the plant operates at partial loads for most of the time. By introducing thermostatic valves capable of adjusting the flow rate according to the actual heat needs thus allowing a significant energy saving, the operating hours at partial load are significantly increased with respect to the past.

With regard to what is said above, it is therefore likely that an utility modifies the flow rate of hot water circulating in its branch of plant, for example by partializing the flow rate due to a reduced request for heat. In such a case, since the various utilities are arranged in parallel to ensure a hot water inlet with a uniform temperature, a perturbation is generated which affects the whole circuit, thus also affecting the utilities which should not have undergone variations. With reference to figure 1 for example, if utility 1 is closed, the overall flow rate circulating will not be the 2/3 of the nominal flow rate Qn, but will be greater and range between 2/3 Qn and Qn. Therefore, a flow rate will circulate in the two utilities that remained open which is greater than the nominal flow rate set during the static balancing, with subsequent decay of the climatic comfort. This occurs because the differential pressure between the delivery conduit and the return conduit is no longer equal to the nominal value, but has increased. Part of the energy savings obtained by closing utility 1 are therefore nullified by the overtemperature of the utilities 2 and 3. Moreover, the increase in the differential pressure past the nominal value increases the risk of malfunctioning and noise of the thermostatic valves placed close to the heating elements.

The function of the DPCV is the one of keeping constant the value of the differential pressure of the whole circuit, including the valve itself and the connection point of the capillary tube, within a wide range of flow rates. Thereby, closing or partializing one or more utilities within the circuit does not in any manner affect the remaining utilities which remained open at the nominal value. This allows the management of the plant to be optimized at partial loads, both in terms of energy savings and comfort.

Moreover, the DPCV allows saving time, also during the initial steps of commissioning the plant, that is when the static balancing is performed. Indeed, when there is no DPCV, intervening on a balancing valve of each individual utility affects all the others in the circuit, hence the operator is forced to act on each individual valve two or several times, depending on the size and complexity of the plant. If there is a DPCV, it is instead sufficient to set the differential pressure value desired and to act on the individual balancing valves only once.

The range of differential pressures used in common heating plants is very broad and ranges between 5 and 60 kPa. There currently are no DPCVs capable of acting in such a broad differential pressure range, hence two different configurations are commonly provided: DPCVs operating in a low differential pressure range (5-30 kPa) and DPCVs operating in a high range (30- 60 kPa).

This fact creates certain drawbacks. Firstly, retailers and distributors must keep a large range of items in stock because in addition to the aforesaid difference in differential operating pressure, the valves are to be prepared with connections having different gauge to meet the various needs of the utilities. Secondly, it may occur that the difference in nominal pressure caused during the design step of a plant deviates significantly from the actual one detected in the plant under nominal conditions, due to variations not provided in the project and introduced during the production, unexpected losses of load, and so on. In such a case, if the differential pressure detected exceeds the bottom scale of the DPCV installed, the only solution is to disassemble it from the plant and replace it with the version operating in the other differential pressure ranges, with the subsequent increase in commissioning times and costs.

The prior art document WO 90/01657 discloses a differential pressure control valve for central heating according to the preamble of present claim 1.

Prior art document WO 2006/003685 discloses a diaphragm valve used for pressure control, whereby the diaphragm is loaded by a first spring as well as a second spring installed in parallel to the first one, whereby the second spring can be operated so as to be used concurrently with the first spring so as to counteract the movement of the diaphragm or alternatively can be inhibited. A screw acts on the second spring that on its turn acts on a stem, while another spring is provided to "cancel out the pre-loading" of the first spring.

### Summary of the invention

The present invention addresses the problem noted above by making a DPCV available capable of operating within the whole range of differential pressures normally detected, that is 5 and 60 kPa.

Therefore, the subject of the present invention is a valve as outlined in the appended claims.

Further features and advantages of the present invention will become more apparent from the description of some embodiments thereof, given only by way of nonlimiting, indicative examples, with reference to the accompanying drawings, in which:
Figure 1 depicts a diagrammatic view of a heating plant which mounts a DPCV;

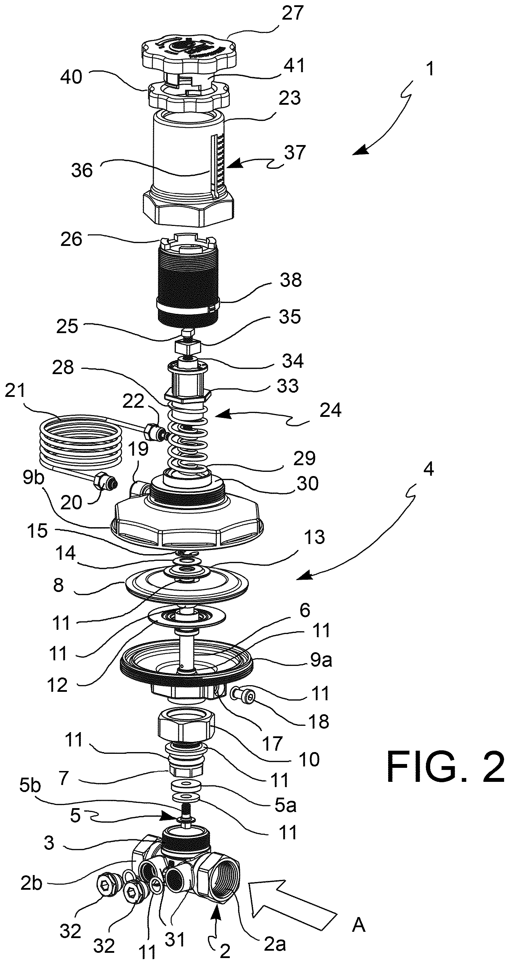

Figure 2 depicts an exploded perspective view of a valve in accordance with the invention;

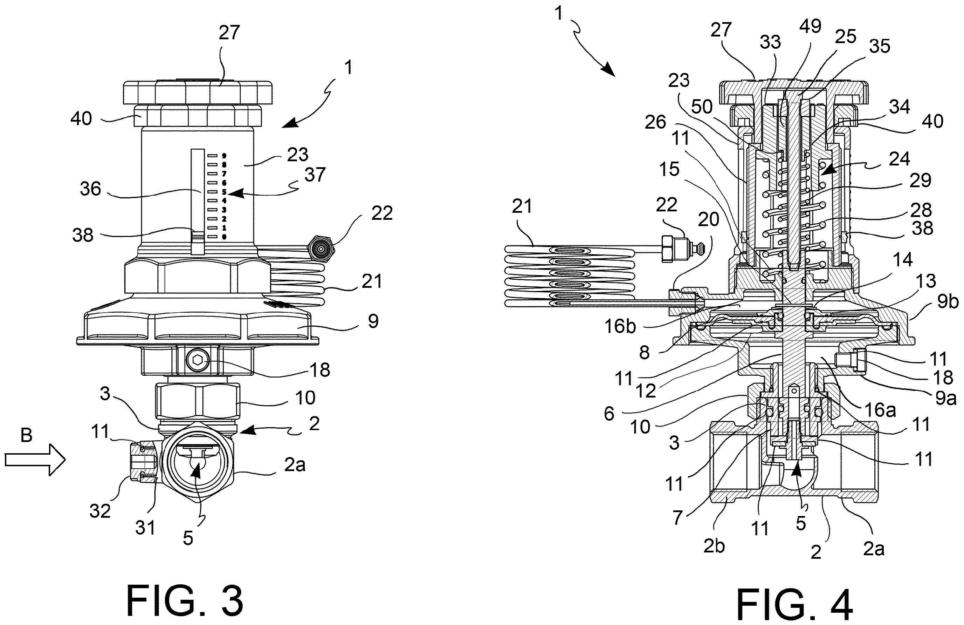

Figure 3 depicts a side view of the valve of the invention in assembled format, according to direction A in figure 2;
Figure 4 depicts a sectional side view of the valve of the invention, according to direction B in figure 3;
Figure 5A depicts the view in figure 4 in a first operating condition;
Figure 5B depicts the view in figure 4 in a second operating condition;
Figure 6 depicts a perspective view of a detail of the valve in accordance with the invention;
Figure 7 depicts a top perspective view of the detail in figure 6;
Figure 8 depicts a bottom perspective view of the detail in figure 6;
Figure 9 depicts a sectional side view of the detail in figure 6;
Figure 10 depicts a sectional side view of the detail in figure 6, rotated by 45° with respect to the view in figure 9.

### Detailed description of the invention

The present invention relates to a DPCV type valve, which can be used in heating plants.

Figure 1 shows a general diagram of a heating plant comprising:
- a boiler C for generating a hot fluid, typically hot water,
- a delivery line M in which the hot fluid is circulated by means of a pump P,
- a plurality of utilities U arranged in parallel with and connected to the delivery line M, with the interposition of a static balancing valve VB,
- a return line R which connects the utilities U with the inlet of boiler C,
- a DPCV interposed along the return line and connected with the static balancing valve VB by means of capillary tube T.

The capillary tube T in other types of plants may be connected in a different point of the delivery line M and the static balancing valve VB may also be omitted, thus only performing the balancing directly on the valves on the utilities U.

The utilities U may be thermosiphon plants or radiators, a coil for floor heating, fan-coils or similar devices.

The present invention relates to the DPCV valve and allows a valve to be obtained that can be used within a larger differential pressure range with respect to known DPCVs.

With reference to the figures from 2 to 10, the valve according to the present invention indicated as a whole with numeral 1 comprises a tubular shaped body 2 open at both ends so as to define a stretch of conduit adapted to be inserted along a return line R of a heating plant. The connection of valve 1 and the pipe of the return line R by means of body 2 occurs by means of threaded fittings 2a, 2b placed at the two ends of body 2. The threaded fittings 2a, 2b may have the sizes normally used for heating plant pipes, in particular ½", ¾", 1", 1"1/4, 1"1/2, 2". The threads may be female or male depending on the specific needs.

Body 2 comprises a first sleeve 3 which extends perpendicular to the axis of body 2 and is outwardly threaded so as to be joined with an actuator member 4 of valve 1.

Body 2 comprises two further sleeves 31 which form an arrangement for a pressure measuring circuit, for example by means of a manometer or other suitable instrument for measuring the differential pressure. If such a measuring circuit is not used, the sleeves 31 may be closed by specific caps 32 and respective gaskets 11.

The actuator member 4 comprises a membrane 8 connected to a stem 6 which terminates on the lower part with a shutter 5. The sleeve 3 of body 2 defines a seat for shutter 5, which is adapted to limit and adjust the flow rate of the liquid circulating inside the body 2 of valve 1. Shutter 5 is formed by a pin 5b and by a sealing ring 5a, between which a gasket 11 is arranged.

In certain embodiments, membrane 8 is made of a clothed EPDM elastomer.

Membrane 8 is enclosed in a shell 9 consisting of a lower half-shell 9a and an upper half-shell 9b.

The lower half-shell 9a comprises a central hole for the passage of stem 6 and is connected to the sleeve 3 of the body 2 of valve 1 by means of a connection cap 10 and a shank 7. The seal is ensured by a gasket system 11.

Membrane 8 is pierced in the centre so as to allow the passage of stem 6, and is fixed thereto by means of a lower plate 12 and an upper ring nut 13. The seal is ensured by suitable gaskets 11 also in this case.

A Belleville spring 14 withheld by a sealing ring 15, e.g. a Seeger ring, is placed above the ring nut 13. The Belleville spring 14 promotes the packing and retaining of membrane 8 between lower plate 12 and upper ring nut 13, thus ensuring the perfect sealing of the assembly.

Shell 9 defines a lower chamber 16a therein, placed below membrane 8, and an upper chamber 16b, placed above membrane 8. The two chambers 16a, 16b are isolated from each other, due to the sealing ensured by membrane 8 and by the related gaskets 11.

The lower chamber 16a comprises a drain hole 17 made in the lower half-shell 9a. The drain hole 17 is threaded and is obstructed sealingly by an adjusting screw 18 and the related gasket 11. The drain hole 17 may be partly opened by loosening the adjusting screw 18 to allow the release of air accumulated in the lower chamber 16a during the plant loading step.

The upper chamber 16b in turn comprises an opening 19 to which a capillary tube 21 is connected by means of suitable connection means 20. The capillary tube 21 comprises, at the opposite end thereof, means 22 for connection to the static balancing valve VB of the plant.

The upper half-shell 9b comprises a central hole which allows the passage of stem 6, which therefore protrudes upwards. A contrast surface 30 is arranged about the central hole, the function of which will be apparent later in the description.

There is fixed an envelope 23 on the upper half-shell 9b, e.g. by screwing, which contains an adjustment member 24 which comprises elastic contrast means. Envelope 23 is substantially cylindrical in shape and is open on the upper part.

Envelope 23 also has at least one longitudinal slot 36, at which a graduated scale 37 is placed.

The adjustment member 24 comprises the following elements:
- a threaded rod 25, constrained on the lower part to stem 6 so as to prevent the rotation thereof;
- an outer rotatable element 26 having a substantially cylindrical shape and comprising a thread on the outer surface thereof;
- an adjustment knob 27 placed on the upper part of envelope 23 and constrained in rotation to the outer rotatable element 26;
- a first spring, or outer spring 28, which lower end rests on the contrast surface 30 of the upper half-shell 9b;
- a second spring, or inner spring 29, arranged coaxially with respect to the first spring 28, which lower end rests on the contrast surface 30 of the upper half-shell 9b;
- a first pusher element 33 for said outer spring 28, positioned so as to rest on the upper end of the outer spring 28;
- a second pusher element 34 for said inner spring 29, arranged coaxially to the first pusher element 33 and positioned so as to rest on the upper end of the inner spring 29;
- a selection member 35 adapted to select between a preload condition of the inner spring 29 only or of both the inner 29 and outer 28 springs.

An indicator ring 38 is associated with the outer rotatable element 26 at the threaded outer surface, the indicator ring 38 having a threaded inner surface and an outer surface having at least one projection adapted to be inserted into the at least one longitudinal slot 37 of envelope 23.

The adjustment knob 27 is removable. As shown in the drawings, in certain embodiments knob 27 comprises tabs 41 associated with a lock/unlock mechanism present in a lock/unlock nut ring 40, so that knob 40 and the lock/unlock nut ring 40 may be removed by rotating the latter in one direction, while knob 27 solidarizes with the outer rotatable element 26 by rotating the lock/unlock nut ring 40 in the opposite direction.

In preferred embodiments, the outer spring 28 and the inner spring 29 are helical springs. In certain embodiments, the outer spring 28 and the inner spring 29 have substantially similar elastic constants k, for example preferably ranging between 4.4 and 4.7 N/cm.

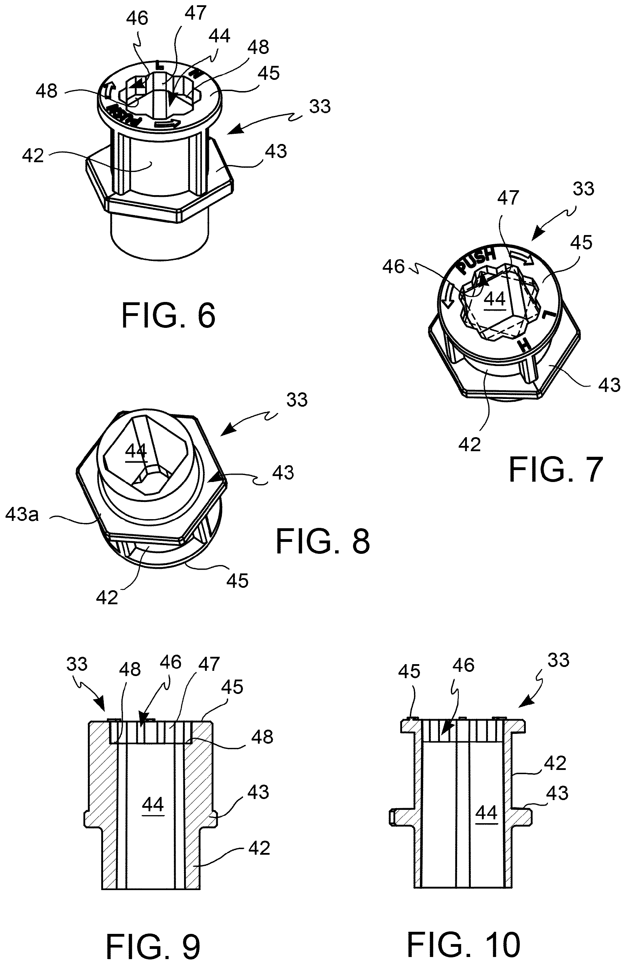

The first pusher element 33 (shown in figures 6 to 10) comprises a hollow body 42 which has a relief 43 on the outer surface, which relief is arranged on a plane perpendicular to the axis of the hollow body 42 and having a contour of non-circular shape, e.g. polygonal (a hexagonal shape is shown in the figures). Such a contour is complementary to the inner section of the outer rotatable element 26, so that the first pusher element 33 is also placed in rotation by rotating the outer rotatable element 26.

Relief 43 comprises a lower surface 43a intended to act on the upper end of the outer spring 28.

The hollow body 42 has an inner cavity 44 with square section (as in the figures), also if a diversely polygonal section may be had in given embodiments, e.g. a triangular or pentagonal section. The description below refers to a square section.

In preferred embodiments, the edges of the inner cavity 44 are rounded.

The first pusher element 33 comprises an upper edge 45 which has an inner contour 46 having eight notches 47, four notches 47 of which are arranged at the vertices of a first square and the other four notches 47 are arranged at the vertices of a second square offset by about 45° with respect to the first square (see the dotted lines in figure 7).

It is also worth noting that the 45° offset is dictated only for reasons of ease of manufacturing and the geometry of the device. Thereby, the notches 47 indeed are placed at the vertices of a regular octagon. However, an offset of a different angle could be prepared, e.g. 30° or the like, without altering the operating concept of the device.

The first square defined by the four notches 47 is aligned with the inner cavity 44 of the hollow body 42, so as to create a passage with square section and with the rounded edges that runs throughout the whole length of the hollow body 42.

The second square defined by the remaining four notches 47 is thus offset with respect to the inner cavity 44. Thus, the four notches 47 offset by 45° have an inner shoulder 48 at the junction point between inner contour 46 and inner cavity 44.

The second pusher element 34 has a longitudinal hole 49 adapted to introduce the threaded rod 25. The body of the second pusher element 34 comprises an upper portion with a larger outer diameter and a lower portion with a smaller outer diameter, so as to form a shoulder 50 intended to act on the upper end of the inner spring 29.

The selection member 35 comprises a nut with square shape with rounded edges, which is complementary to the profile of the section of the inner cavity 44 of the first pusher element 33, and is therefore sized so that the edges thereof are arranged in the four notches 47 of the inner contour 46 of the upper edge 45. The nut has an inner thread so as to be screwed onto the threaded rod 25.

In other embodiments, the selection member 35 may have a different shape, however complementary to the sectional profile of the inner cavity of the first pusher element 33.

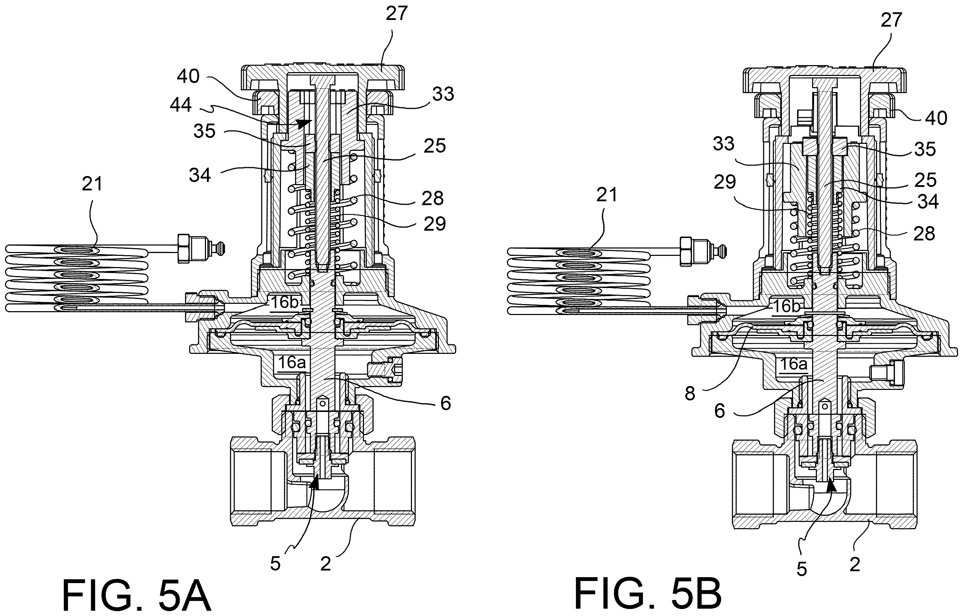

The operation of the DPCV of the invention is described hereinbelow. In such a description, reference in particular is made to figures 5A and 5b, in which only the numerals of the components of the valve directly involved in such an operation are indicated for simplicity.

The body 2 of valve 1 is connected in line along a return conduit R of a heating plant, while the capillary tube 21 is connected to a static balancing valve VB placed along the delivery line M of the heating plant. Thereby, the shutter 5 of valve 1 is subjected to the pressure in the return line R, while the upper surface of membrane 8, that is the surface facing the upper chamber 16b, is subjected to the pressure in the delivery line M. Therefore, a given differential pressure is established between delivery line (with greater pressure) and return line, which is set when the plant is installed and is to be kept constant under all operating conditions of the plant itself.

If a utility U is partly or totally excluded, the delivery pressure tends to increase in the absence of a DPCV, with the consequence of providing an increased flow rate of hot water to the utilities U that remained open and therefore altering the thermosetting assigned to such utilities, with the drawbacks described in the discussion on the background art indicated above.

However, the increase in pressure on the delivery line M in the presence of the DPCV induces a downward bending of membrane 8, which in the movement thereof, drags stem 6 and accordingly shutter 5, thus interfering with the flow of liquid in body 2 of the valve so as to decrease the flow rate in the return line R.

The downward movement of stem 6 caused by the increase in pressure in the upper chamber 16b occurs in contrast with the spring (s) 28, 29 (as better described later), because stem 6 is integral with the threaded rod 25 and the latter, in the longitudinal movement thereof, is associated with the selection member 35 (coupling between threads). Thereby, the differential pressure is maintained at a given predefined calibration value by operating with springs having a predetermined preload.

When the selection member 35 is arranged at the four notches 47 placed at the vertices of the first square aligned with the inner cavity 44 of the first pusher element 33, the downward sliding of the threaded rod 25, and therefore of the selection member 35, acts on the second pusher element 34 and induces an increase in load of the inner spring 29 alone. If the selection member 35 is instead arranged at the four notches 47 placed at the vertices of the second square offset with the inner cavity 44, the selection member 35 rests on the inner shoulders 48 of the first pusher element 33 and, in the downward travel thereof, it drags also the latter, while accordingly increasing the load both of the outer spring 28 and of the inner spring 29. Considering that the inner spring 29 and the outer spring 28 are placed in parallel, the force of reaction induced by the compression of such springs is additive.

It will therefore be possible to operate in a first range of smaller differential pressure values (e.g. between 5 and 30 kPa) by selecting the operation of the inner spring 29 alone, while operation will occur in a second range of greater differential pressure values (for example between 30 and 60 kPa) by selecting the operation of both springs 28, 29.

The selection between the first and the second operating modes of the valve of the invention may be made as follows.

Firstly, knob 27 is removed so as to access the mechanism of the actuator member 4. The removal of knob 27 is performed by rotating the lock/unlock nut ring 40 so as to free the tabs 41 and therefore remove knob 27.

Then the first pusher element 33 is pushed downwards so as to free the selection member 35 from the related notches 47, then the first pusher element 33 is rotated by 45° and the pressure thereon is released. Thereby, the selection member 35 is inserted at the other four notches 47 offset by 45°. At this point, knob 27 may be repositioned.

Once the operating mode is selected with a low differential pressure range (operation of the inner spring 29 alone) or with a high differential pressure range (operation of both the springs 28, 29), the instrument may be calibrated at a desired differential pressure in the following manner.

If the low differential pressure range was selected, rotating knob 27 in one direction or in the opposite direction induces the simultaneous rotation of the outer rotatable element 26, of the first pusher element 33 and of the selection member 35, which in such a mode may move, by screwing or unscrewing, upwards or downwards along the threaded rod 25, thus operating on the inner spring 28 alone up to a given preload corresponding to a differential pressure of predefined calibration. This operating condition is shown in figure 5A, in which it is noted that the selection member 35 has moved within cavity 44, while the first pusher element 33 remained axially immobile.
Simultaneously, the rotation of the outer rotatable element 26 induces the upward or downward movement of the indicator ring 38. Indeed, by being constrained in rotation by the projections inserted in the longitudinal slot 36 of envelope 23, the indicator ring may be screwed or unscrewed only on the outer thread of the outer rotatable element 26. The graduated scale 37 allows the correct differential pressure value desired to be set.
If the high differential pressure range was selected, the rotation of knob 27 in one direction or in the opposite direction induces, by screwing or unscrewing, the upward or downward movement of the selection member 35 along the threaded rod 25 in conjunction with the first pusher element 33, thus operating both on the inner spring 29 and on the outer spring 28 up to a given preload of both springs corresponding to a differential pressure of predefined calibration. This operating condition is shown in figure 5B, in which it is noted that the selection member 35 has moved downwards integrally with the first pusher element 33, thus causing the compression both of the inner spring 29 and of the outer spring 28.

The advantages of the DPCV in accordance with the invention are apparent from what is said.

In particular, operation may occur with a single DPCV within the differential pressure range required in regular heating plants, typically between 5 and 60 kPa.

## Claims

1. Valve (1) for differential pressure control comprising:
- a body (2) extending along a longitudinal axis placed in a fluid flow line at a first pressure,
- a sleeve (3) extending from the body (2),
- an actuator member (4) connected to said sleeve (3), wherein the actuator member (4) comprises a shutter (5) that can move downwards against preloaded elastic means, said shutter (5) being integral to a membrane (8),
said membrane (8) having an upper surface upon which a fluid acts at a second pressure greater than said first pressure, wherein the membrane (8) is enclosed in a shell (9) and is connected to a stem (6) which terminates on the lower part with said shutter (5), wherein the shell (9) defines a lower chamber (16a) therein, placed below the membrane (8), and an upper chamber (16b), placed above the membrane (8), the two chambers (16a, 16b) being sealingly isolated from each other, wherein the upper chamber (16b) is in flow communication with said fluid at said second pressure, **characterized in that** the preloaded elastic means comprise:
- an outer spring (28) having a lower end which rests on a surface (30) placed on the shell (9), and
- an inner spring (29), arranged coaxially with respect to the outer spring (28), whose lower end rests on the surface (30) of the shell (9), wherein said inner spring (29) can act individually according to a first operating mode or in parallel with said outer spring (28) according to a second operating mode, wherein said first and second operating mode can be selected,
and further **characterised in that** the valve (1) further comprises an adjustment member (24) which comprises:
- a threaded rod (25) constrained to the stem (6) and fixed in rotation;
- an outer rotatable element (26) having a substantially cylindrical and threaded outer surface;
- an adjustment knob (27) constrained in rotation to the outer rotatable element (26);
- a first pusher element (33) for said outer spring (28), positioned so as to rest on the upper end of the outer spring (28);
- a second pusher element (34) for said inner spring (29), arranged coaxially with the first pusher element (33) and positioned so as to rest on the upper end of the inner spring (29);
- a selection member (35) adapted to select between a preload condition of the inner spring (29) only or of both the inner (29) and outer (28) spring,
and wherein
the second pusher element (34) has a longitudinal hole (49) adapted to accomodate the threaded rod (25), and the selection member (35) comprises a nut, wherein the nut has an inner thread so as to be screwed onto the threaded rod (25).

2. Valve (1) according to claim 1, wherein the lower chamber (16a) comprises a drain hole (17) to allow the release of air accumulated in the lower chamber (16a) during the plant loading step.

3. Valve (1) according to claim 1, wherein the adjustment member (24) is contained in an envelope (23) from which the knob (27) protrudes, said envelope (23) having at least one longitudinal slot (37), and wherein to the threaded outer surface of the outer rotatable element (26) is associated an indicator ring (38) which has a threaded inner surface and an outer surface having at least one projection adapted to be inserted in the at least one longitudinal slot (37) of the envelope (23).

4. Valve (1) according to any one of claims 1 to 3, wherein the adjustment knob (27) is removable.

5. Valve (1) according to claim 4, wherein the adjustment knob (27) comprises tabs (41) associated with a lock/unlock mechanism present in a lock/unlock nut ring (40), such that, by rotation of the latter in one direction, the knob (27) can be removed, while by rotation of the lock/unlock nut ring (40) in the opposite direction the knob (27) solidarizes with the outer rotatable element (26).

6. Valve (1) according to any one of claims from 1 to 5, wherein the first pusher element (33) comprises a hollow body (42) which has a relief (43) on the outer surface, which relief is arranged on a plane perpendicular to the axis of the hollow body (42) and having a contour of non-circular shape, for example polygonal, said contour being complementary to the inner section of the outer rotatable element (26), such that, by rotation of the latter, also the first pusher element (33) is placed in rotation; and wherein the relief (43) comprises a lower surface (43a) which acts on the upper end of the outer spring (28).

7. Valve (1) according to claim 6, wherein the hollow body (42) has an inner cavity (44) with substantially square section, preferably with rounded edges, and wherein the first pusher element (33) comprises an upper edge (45) which has an inner contour (46) having eight notches (47), of which four notches (47) are arranged at the vertices of a first square and the other four notches (47) are arranged at the vertices of a second square offset by about 45° with respect to the first square, wherein the first square is aligned with the inner cavity (44) of the hollow body (42), so as to create a passage with square section and preferably with rounded edges that runs throughout the length of the hollow body (42); and wherein the second square is thus offset with respect to the inner cavity (44).

8. Valve (1) according to claim 7, wherein the four notches (47) at the vertices of the square offset by 45° have, at the junction point between inner contour (46) and inner cavity (44), an inner shoulder (48).

9. Valve (1) according to any one of claims from 1 to 8, wherein the selection member (35) comprises a nut having an inner thread so as to be able to be screwed onto the threaded rod (25), with square shape complementary to the profile of the section of the inner cavity (44) of the first pusher element (33) and is sized so that its edges are arranged in four notches (47) of the inner contour (46) of the upper edge (45), such that, in said first operating mode, the selection member (35) can slide in the inner cavity (44) acting only on the inner spring (29), while in said second operating mode it carries both the first pusher element (33) and the second pusher element (34) downwards, simultaneously acting on the inner spring (29) and on the outer spring (28) .

## Patentansprüche

1. Ventil (1) zur Differenzdruckregelung, umfassend:
- einen Körper (2), der sich entlang einer Längsachse erstreckt und in einer Fluidströmungsleitung bei einem ersten Druck angeordnet ist,
- eine vom Körper (2) ausgehende Hülse (3),
- ein Betätigungselement (4), das mit der Hülse (3) verbunden ist, wobei das Betätigungselement (4) einen Verschluss (5) umfasst, der sich gegen vorgespannte elastische Mittel nach unten bewegen kann, wobei der Verschluss (5) einteilig mit einer Membran (8) ausgebildet ist,
wobei die Membran (8) eine obere Fläche aufweist, auf die ein Fluid mit einem zweiten Druck wirkt, der größer als der erste Druck ist, wobei die Membran (8) in eine Schale (9) eingeschlossen ist und mit einem Schaft (6) verbunden ist, der am unteren Teil mit dem Verschluss (5) endet, wobei die Schale (9) eine untere Kammer (16a) darin definiert, die unter der Membran (8) angeordnet ist, und eine obere Kammer (16b), die über der Membran (8) angeordnet ist, wobei die beiden Kammern (16a, 16b) abgedichtet voneinander isoliert sind, wobei die obere Kammer (16b) in Strömungsverbindung mit dem Fluid beim zweiten Druck steht,
**dadurch gekennzeichnet, dass**
die vorgespannten elastischen Mittel umfassen:
- eine äußere Feder (28) mit einem unteren Ende, das auf einer auf der Schale (9) angeordneten Fläche (30) ruht, und
- eine innere Feder (29), die koaxial zur äußeren Feder (28) angeordnet ist, deren unteres Ende auf der Oberfläche (30) der Schale (9) aufliegt, wobei die innere Feder (29) einzeln gemäß einer ersten Betriebsart oder parallel zur äußeren Feder (28) gemäß einer zweiten Betriebsart wirken kann, wobei die erste und zweite Betriebsart ausgewählt werden kann,
und ferner
**dadurch gekennzeichnet ist, dass** das Ventil (1) ferner ein Einstellglied (24) umfasst, das Folgendes umfasst:
- eine Gewindestange (25), die am Schaft (6) befestigt und in der Drehung fixiert ist;
- ein äußeres drehbares Element (26) mit einer im Wesentlichen zylindrischen und mit einem Gewinde versehenen Außenfläche;
- einen Einstellknopf (27), der in der Drehung an das äußere drehbare Element (26) gebunden ist;
- ein erstes Schiebeelement (33) für die äußere Feder (28), das so positioniert ist, dass es auf dem oberen Ende der äußeren Feder (28) aufliegt;
- ein zweites Schiebeelement (34) für die innere Feder (29), das koaxial zum ersten Schiebeelement (33) angeordnet und so positioniert ist, dass es auf dem oberen Ende der inneren Feder (29) aufliegt;
- ein Auswahlelement (35), das dafür ausgelegt ist, zwischen einem Vorspannungszustand nur der inneren Feder (29) oder sowohl der inneren (29) als auch der äußeren (28) Feder zu wählen, und wobei
das zweite Schiebeelement (34) ein Längsloch (49) aufweist, das zur Aufnahme der Gewindestange (25) geeignet ist, und das Auswahlelement (35) eine Mutter umfasst, wobei die Mutter ein Innengewinde aufweist, um auf die Gewindestange (25) geschraubt zu werden.

2. Ventil (1) nach Anspruch 1, wobei die untere Kammer (16a) eine Abflussöffnung (17) aufweist, um die Freisetzung der in der unteren Kammer (16a) angesammelten Luft während des Beladungsschritts der Anlage zu ermöglichen.

3. Ventil (1) nach Anspruch 1, wobei das Einstellelement (24) in einer Hülle (23) enthalten ist, aus der der Knopf (27) herausragt, wobei die Hülle (23) mindestens einen Längsschlitz (37) aufweist, und wobei der mit einem Gewinde versehenen Außenfläche des äußeren drehbaren Elements (26) ein Anzeigering (38) zugeordnet ist, der eine mit einem Gewinde versehene Innenfläche und eine Außenfläche mit mindestens einem Vorsprung aufweist, der in den mindestens einen Längsschlitz (37) der Hülle (23) eingeführt werden kann.

4. Ventil (1) nach einem der Ansprüche 1 bis 3, wobei der Einstellknopf (27) abnehmbar ist.

5. Ventil (1) nach Anspruch 4, wobei der Einstellknopf (27) Laschen (41) umfasst, die mit einem Verriegelungs-/Entriegelungsmechanismus verbunden sind, der in einem Verriegelungs-/Entriegelungsmutterring (40) vorhanden ist, sodass durch Drehung des letzteren in eine Richtung der Knopf (27) entfernt werden kann, während sich durch Drehung des Verriegelungs-/Entriegelungsmutterrings (40) in die entgegengesetzte Richtung der Knopf (27) mit dem äußeren drehbaren Element (26) verfestigt.

6. Ventil (1) nach einem der Ansprüche 1 bis 5, wobei das erste Schiebeelement (33) einen Hohlkörper (42) aufweist, der an der Außenfläche ein Relief (43) aufweist, das in einer Ebene senkrecht zur Achse des Hohlkörpers (42) angeordnet ist und eine nichtkreisförmige, z.B. polygonale Form hat, wobei diese Form komplementär zum inneren Abschnitt des äußeren drehbaren Elementes (26) ist, sodass durch Drehung des letzteren auch das erste Schiebeelement (33) in Drehung versetzt wird; und wobei das Relief (43) eine untere Fläche (43a) umfasst, die auf das obere Ende der äußeren Feder (28) wirkt.

7. Ventil (1) nach Anspruch 6, wobei der Hohlkörper (42) einen Innenhohlraum (44) mit im Wesentlichen quadratischem Querschnitt, vorzugsweise mit abgerundeten Kanten, aufweist, und wobei das erste Schiebeelement (33) eine Oberkante (45) aufweist, die eine Innenkontur (46) mit acht Kerben (47) aufweist, von denen vier Kerben (47) an den Spitzen eines ersten Quadrats und die anderen vier Kerben (47) an den Spitzen eines zweiten Quadrats angeordnet sind, das um etwa 45° in Bezug auf das erste Quadrat versetzt ist, wobei das erste Quadrat zum inneren Hohlraum (44) des Hohlkörpers (42) ausgerichtet ist, sodass ein Durchgang mit quadratischem Querschnitt und vorzugsweise mit abgerundeten Kanten entsteht, der über die gesamte Länge des Hohlkörpers (42) verläuft; und wobei das zweite Quadrat somit in Bezug auf den inneren Hohlraum (44) versetzt ist.

8. Ventil (1) nach Anspruch 7, wobei die vier Kerben (47) an den Scheitelpunkten des um 45° versetzten Quadrates an der Verbindungsstelle zwischen Innenkontur (46) und Innenhohlraum (44) eine innere Schulter (48) aufweisen.

9. Ventil (1) nach einem der Ansprüche 1 bis 8, bei dem das Auswahlelement (35) eine Mutter mit einem Innengewinde zum Aufschrauben auf die Gewindestange (25) mit quadratischer Form komplementär zum Profil des Querschnitts des inneren Hohlraums (44) des ersten Schiebeelements (33) aufweist und so bemessen ist, dass seine Kanten in vier Kerben (47) der Innenkontur (46) des oberen Randes (45) angeordnet sind, derart, dass in der ersten Betriebsart das Auswahlelement (35) in dem inneren Hohlraum (44) gleiten kann, wobei es nur auf die innere Feder (29) wirkt, während es in der zweiten Betriebsart sowohl das erste Schiebeelement (33) als auch das zweite Schiebeelement (34) nach unten trägt und gleichzeitig auf die innere Feder (29) und auf die äußere Feder (28) wirkt.

## Revendications

1. Soupape (1) pour la commande d'une pression différentielle, comprenant :
- un corps (2) s'étendant le long d'un axe longitudinal placé dans une ligne d'écoulement de fluide à une première pression,
- un manchon (3) s'étendant à partir du corps (2),
- un élément d'actionnement (4) relié audit manchon (3), l'élément d'actionnement (4) comprenant un obturateur (5) apte à se déplacer vers le bas contre un moyen élastique précontraint, ledit obturateur (5) étant intégré dans une membrane (8),
ladite membrane (8) présentant une surface supérieure sur laquelle un fluide agit à une deuxième pression supérieure à ladite première pression, la membrane (8) étant enfermée dans une coquille (9) et reliée à une tige (6) se terminant sur la partie inférieure avec ledit obturateur (5), la coquille (9) définissant une chambre inférieure (16a) dans celle-ci, placée en dessous de la membrane (8), et une chambre supérieure (16b) placée au-dessus de la membrane (8), les deux chambres (16a, 16b) étant isolées de façon étanche l'une de l'autre, la chambre supérieure (16b) étant en communication fluidique avec ledit fluide à ladite deuxième pression,
**caractérisée en ce que**
le moyen élastique précontraint comprend :
- un ressort extérieur (28) présentant une extrémité inférieure reposant sur une surface (30) placée sur la coquille (9), et
- un ressort intérieur (29) disposé coaxialement par rapport au ressort extérieur (28), dont l'extrémité inférieure repose sur la surface (30) de la coquille (9), le ressort intérieur (29) pouvant agir individuellement conformément à un premier mode de fonctionnement ou en parallèle avec ledit ressort extérieur (28) conformément à un deuxième mode de fonctionnement, lesdits premier et deuxième modes de fonctionnement pouvant être sélectionnés, et en outre
**caractérisée en ce que** la soupape (1) comprend en outre un élément de réglage (24) comprenant :
- une barre filetée (25) contrainte à la tige (6) et fixe en rotation ;
- un élément rotatif extérieur (26) présentant une surface extérieure filetée et substantiellement cylindrique ;
- un bouton de réglage (27) contraint en rotation à l'élément rotatif extérieur (26) ;
- un premier élément de poussée (33) pour ledit ressort extérieur (28), positionné de manière à reposer sur l'extrémité supérieure du ressort extérieur (28) ;
- un deuxième élément de poussée (34) pour ledit ressort intérieur (29), disposé coaxialement avec le premier élément de poussée (33) et positionné de manière à reposer sur l'extrémité supérieure du ressort intérieur (29) ;
- un élément de sélection (35) adapté pour effectuer une sélection entre un état de précharge du ressort intérieur (29) uniquement ou à la fois du ressort intérieur (29) et du ressort extérieur (28),
et dans laquelle
le deuxième élément de poussée (34) présente un trou longitudinal (49) adapté pour accueillir une tige filetée (25), et l'élément de sélection (35) comprend un écrou, l'écrou présentant un filetage interne de manière à pouvoir être vissé sur la tige filetée (25).

2. Soupape (1) selon la revendication 1, dans laquelle la chambre inférieure (16a) comprend un trou d'évacuation (17) permettant de libérer de l'air accumulé dans la chambre inférieure (16a) pendant l'étape de chargement de la station.

3. Soupape (1) selon la revendication 1, dans laquelle l'élément de réglage (24) est contenu dans une enveloppe (23) sur laquelle le bouton (27) fait saillie, ladite enveloppe (23) présentant au moins une fente longitudinale (37), et dans laquelle une bague d'indicateur (38) est associée à la surface extérieure filetée de l'élément rotatif extérieur (26), laquelle présente une surface intérieure filetée et une surface extérieure portant au moins une saillie, adaptée pour être insérée dans l'au moins une fente longitudinale (37) de l'enveloppe (23).

4. Soupape (1) selon l'une quelconque des revendications 1 à 3, dans laquelle le bouton de réglage (27) est amovible.

5. Soupape (1) selon la revendication 4, dans laquelle le bouton de réglage (27) comprend des onglets (41) associés à un mécanisme de verrouillage/déverrouillage prévu dans une bague écrou de verrouillage/déverrouillage (40), de telle façon que le bouton (27) peut être retiré par rotation de celle-ci dans une direction, tandis que le bouton (27) devient solidaire de l'élément rotatif extérieur (26) par rotation de la bague écrou de verrouillage/déverrouillage (40) dans la direction opposée.

6. Soupape (1) selon l'une quelconque des revendications 1 à 5, dans laquelle le premier élément de poussée (33) comprend un corps creux (42) présentant un relief (43) sur la surface extérieure, ledit relief étant disposé sur un plan perpendiculaire à l'axe du corps creux (42) et présentant un contour de forme non circulaire, par exemple polygonale, ledit contour étant complémentaire à la section intérieure de l'élément rotatif extérieur (26), de telle façon que le premier élément de poussée (33) est également mis en rotation par rotation de celui-ci ; et dans laquelle le relief (43) comprend une surface inférieure (43a) agissant sur l'extrémité supérieure du ressort extérieur (28).

7. Soupape (1) selon la revendication 6, dans laquelle le corps creux (42) présente une cavité interne (44) avec une section substantiellement carrée, de préférence avec des bords ronds, et dans laquelle le premier élément de poussée (33) comprend un bord supérieur (45) présentant un contour intérieur (46) avec huit encoches (47), parmi lesquelles quatre encoches (47) sont disposées au niveau des sommets d'un premier carré et les quatre autres encoches (47) sont disposées au niveau des sommets d'un deuxième carré décalé d'environ 45° par rapport au premier carré, dans laquelle le premier carré est aligné avec la cavité intérieure (44) du corps creux (42), de manière à créer un passage avec une section carrée et de préférence avec des bords ronds s'étendant sur toute la longueur du corps creux (42) ; et dans laquelle le deuxième carré est ainsi décalé par rapport à la cavité intérieure (44).

8. Soupape (1) selon la revendication 7, dans laquelle les quatre encoches (47) situées au niveau des sommets du carré décalé de 45° présentent un épaulement intérieur (48) au point de jonction entre le contour intérieur (46) et la cavité intérieure (44).

9. Soupape (1) selon l'une quelconque des revendications 1 à 8, dans laquelle l'élément de sélection (35) comprend un écrou présentant un filetage interne de manière à pouvoir être vissé sur la tige filetée (25), avec une forme carrée complémentaire au profil de la section de la cavité intérieure (44) du premier élément de poussée (33) et dimensionné de manière à ce que ses bords soient disposés dans quatre encoches (47) du contour intérieur (46) du bord supérieur (45), de telle façon que dans ledit premier mode de fonctionnement, l'élément de sélection (35) peut coulisser dans la cavité intérieure (44) agissant uniquement sur le ressort intérieur (29), tandis que dans ledit deuxième mode de fonctionnement, celui-ci transporte à la fois le premier élément de poussée (33) et le deuxième élément de poussée (34) vers le bas, agissant simultanément sur le ressort intérieur (29) et sur le ressort extérieur (28).
